Europäisches Patentamt

European Patent Office (11) Publication number: **0 343 384**

Office européen des brevets **A2**

(12) **EUROPEAN PATENT APPLICATION**

(21) Application number: **89107340.5**

(22) Date of filing: **24.04.89**

(51) Int. Cl.⁴: **H01R 25/14**

(30) Priority: **23.05.88 IT 422388 U**

(43) Date of publication of application:
**29.11.89 Bulletin 89/48**

(84) Designated Contracting States:
**AT CH GB GR LI LU NL SE**

(71) Applicant: **DIL S.r.l.**
**Largo delle industrie**
**I-24020 Torre Boldone (Bergamo)(IT)**

(72) Inventor: **Fraser, Alberto**
**P.za Morselli, 1**
**I-20100 Milano(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) **Thermoplastic or similar extrusion for supporting simultaneously powered low and medium voltage electrical conductors and able to receive metal end reinforcement extrusions.**

(57) An extruded body for supporting electrical conductors having a cellular cross-section of closed channels (16A, B, C, D, E, F, G, H, I, L, M) and open channels (6A, B, C, 15) the latter comprising seats for conjugately containing electrical conductors (10,11,12,13,14,17) of different cross-sectional areas.

# THERMOPLASTIC OR SIMILAR EXTRUSION FOR SUPPORTING SIMULTANEOUSLY POWERED LOW AND MEDIUM VOLTAGE ELECTRICAL CONDUCTORS AND ABLE TO RECEIVE METAL END REINFORCEMENT EXTRUSIONS

This invention relates to the field of bus bar trunking designed to simultaneously support both low and medium voltage electrical conductors.

As is well known, bus bar trunking of various types is currently available commercially, but each type being specific for conveying current at one defined voltage range depending on the actual structure of the trunking.

An object of the present invention is to allow current to be conveyed by bus bar trunking simultaneously at low voltage and at medium voltage (220V, 380V), where particular safety measures are required.

A further object is to enable electrical conductors to reach any point within the space of a working or domestic environment without creating problems of an aesthetic nature.

A further object is to provide bus bar trunking for internal use, the flexural rigidity of which can be varied according to requirements.

These and further objects will be seen to be attained on reading the following detailed description concerning an extrusion of thermoplastic material such as antifire PVC, or of other materials possessing similar self-extinguishing and mechanical properties, for supporting electrical conductors, characterised by a cellular cross-section of closed and open channels and comprising a plurality of rectangular seats for conjugately containing electrical conductors having cross-sections such as to allow the optimised transit of both low voltage and medium voltage electric current at the same time.

Said extrusion is further characterised by open longitudinal channels the profile of which comprises retention teeth for fixing said extrusion onto transverse support brackets having their ends shaped for this purpose.

Said extrusion is further characterised by edges which by means of undercuts are engageable by metal extrusions providing flexural stiffening and decorative enrichment.

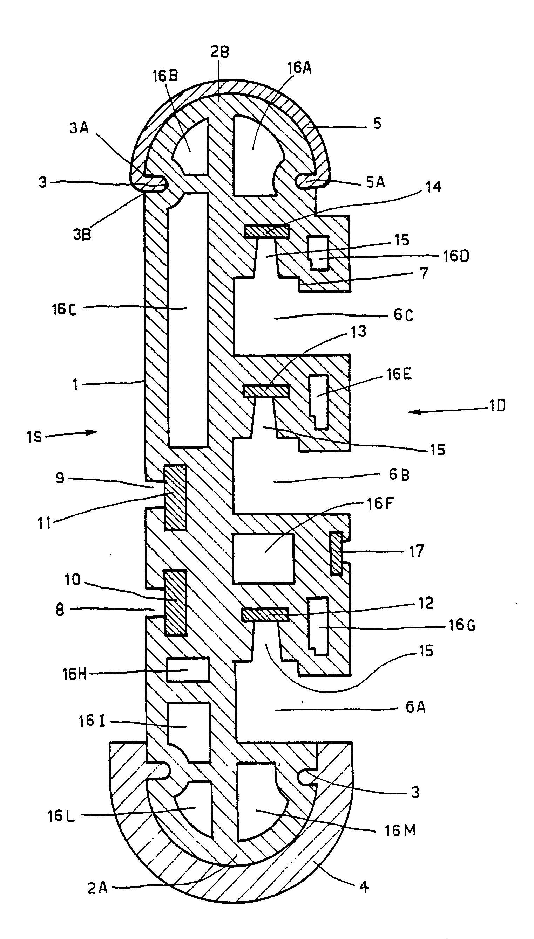

The invention is illustrated by way of non-limiting example on the accompanying drawing which shows a cross-section through a plastics extrusion engaged at its lower edge by a metal extrusion and at its upper edge by a metal shaped section.

With reference to said drawing, an extrusion 1 of antifire thermoplastic material is provided with rounded edges 2A and 2B forming a surface of pleasant appearance which is free of sharp edges which could be uncomfortable or injurious during installation of handling. Said edges 2A and 2B are delimited by symmetrical grooves 3 which are very narrow so that their edges 3A and 3B are not injurious to the hand. The grooves 3 form engagement undercuts for a metal shaped section 4. This section is preferably an aluminium alloy extrusion because of the ease and the variety of methods by which this metal can be coloured, eg. painting, anodic oxidation, polishing, glazing etc. However this extrusion could be replaced by materials of different appearance or mechanical strength, in the form of sheet metal sections of the most suitable shape. Such materials include brass and stainless steel. In such a case the engagement between the plastics extrusion 1 and a sheet metal section, indicated by 5, would be by means of bent ends 5A of this latter.

The extrusion has two sides 1S and 1D, the former being preferred for exposure to view and the latter for connection to support elements, which are inserted into the large channels 6A, 6B, 6C. The side 1S comprises two channels 8 and 9 facing electrical conductors 10 and 11 of rectangular cross-section housed in conjugate channel-shaped cavities provided in the extrusion 1. By way of example only, the illustration shows rectangular cavities for housing correspondingly shaped conductors, however such shapes are not limitative of the invention.

Said conductors 10 and 11 are provided for low voltage, such as 24V, which for equal electrical power convey a larger current. Consequently, to provide equal resistive dissipation they have a greater cross-section that the conductors 12, 13, 14 intended to operate at the normal voltage of 220V.

Said trunking 1 is also provided with various closed channels 16A, B, C, D, E, F, G, H, I, L, M provided to give a certain wall thickness uniformity to aid and accelerate extrusion.

Advantageously, said extrusion enables the same bus bar trunking to contain both a low voltage line (such as 24V) and a normal voltage line (such as 220V). In addition to said conductors, the extrusion according to the invention comprises a housing for a further conductor 17 for conveying possible earth currents.

## Claims

1. An extrusion (1) of antifire thermoplastic material or of other materials possessing similar mechanical and self-extinguishing characteristics, for supporting electrical conductors, characterised by a cellular cross-section of closed channels (16A, B, C, D, E, F, G, H, I, L, M) and open channels (6A, 6B, 6C, 15) comprising seats of rectangular or other shape for conjugately containing electrical conductors (10, 11, 12, 13, 14, 17) having cross-sectional areas such as to allow the optimised simultaneous transit of low voltage electric current (10, 11) and medium voltage electric current (12, 13, 14), and the transit of accidental earth currents (17), said optimised transit being attained by providing conductors of different cross-sectional areas.

2. An extrusion as claimed in the preceding claim, characterised by open longitudinal channels (6A, 6B, 6C) the profile of which comprises retention teeth (7) for fixing said extrusion (1) onto transverse support brackets having their ends shaped for this purpose.

3. An extrusion as claimed in the preceding claims characterised by edges (2A, 2B) which by means of undercuts (3) are engageable by metal extrusions (4) or shaped sections (5) providing flexural stiffening and decorative enrichment.

4. An extrusion as claimed in the preceding claims, characterised by being combined with electrical conductors (10, 11, 12, 13, 14, 17).

5. An extrusion as claimed in the preceding claims, characterised by ends which are rounded such as not to include sharp edges which could produce injury during handling.